# EUROPEAN PATENT APPLICATION

(11) **EP 1 375 415 A1**
(43) Date of publication of application: **02.01.2004**
(21) Application number: 02013703.0
(22) Date of filing: 20.06.2002
(51) Int. Cl.: B67D 5/22, B67D 5/32

(54) **Apparatus and method for controlling the filing of a tank**

(71) Applicant: Gilbarco S.p.A., 50145 Firenze (IT)
(72) Inventor: Carapelli, Giovanni, 50142 Firenze (IT)
(74) Representative: Gervasi, Gemma, Dr.

(57) **Abstract**

It is described an apparatus and method for the monitoring of the flow of a given material into a tank.

This method is based on the frequency analysis of the acoustic noise generated by the pouring of the material into the tank and collected by acoustic sensors. This method gives indications about the presence of the flow and about the quantity of material that has been poured into the tank.

## Description

Apparatus and method for controlling the filling of a tank.

### Field of the invention

The present invention refers to apparatuses and methods for controlling the filling of a tank, providing a flow detection indication and an estimate of the volume of material that has been poured into the tank.

### State of the art

In literature many different devices are described for controlling the filling of tanks (in particular filling with liquids) in order to determine the level of the liquid inside the tank, to determine eventual leakage, to prevent frauds etc.

Level detectors may implement the following topologies:
- they may require that at least part of the structure of the device itself (the sensor) is placed into the tank
- They may employ a source of energy in the form of acoustic or ultrasonic waves which is directed into the tank generating a response signal which is analysed in order to establish the level of the material (normally a liquid) in the tank.

Level sensors like the ones described above could be employed as spillage and anti fraud detectors, nevertheless, anti fraud systems are generally based on the following architecture: they are made of two sections (usually a receiver and a transmitter of signals) located one on the inlet of the tank and the other on the inlet of the dispenser and allowing the flow of the liquid into the tank only when the two device parts are within a determined short distance.

Each one of the systems described above has drawbacks:

It is preferable not to have extraneous parts of a device in a tank, especially if they deal with hazardous materials such as fuel. In this case tanks are requested to comply with safety standards that exclude the presence of any device placed inside them.

The systems based on the analysis of the echoed waves is not as accurate as necessary or desired because this method can only detect if the level of the material inside the tank is higher or lower than a predetermined one, in correspondence of the position of the sensor, on the outside of the tank.

The anti-tampering systems based just on the proximity of the two parts connected respectively to the dispenser and to the tank, can be manipulated since they don't give any indication on the effective presence of a flow of material from the dispenser to the tank.

### Objects of the invention

It is an object of the invention to provide an improved device and method for the constant control of the filling of a tank. Such a device does not include any external part to be placed in the tank and gives a real time indication regarding the presence of a flow of material from the dispenser to the tank and proportional to the volume of the material that has been supplied to the tank itself.

Another object of the invention is to provide a device which performs an harmonic analysis of the acoustic waves generated by the materials (liquids or solids) poured into the tank during the filling operation. This harmonic analysis being oriented to detect the quantity and the flow of material supplied to the tank and the identification of the tank itself.

### Brief description of the drawings

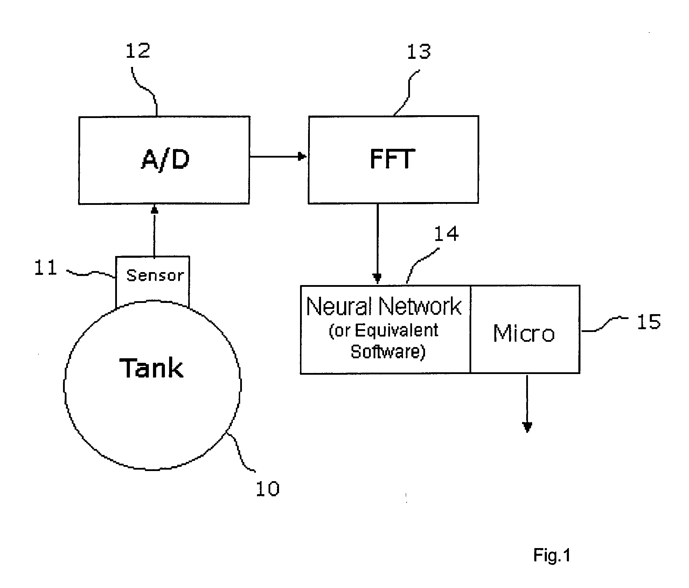

Fig. 1 is a block diagram of a device according to the invention

### Detailed description of the invention

Referring to Fig. 1 it is shown a tank (10) to be filled, as for example a truck tank.

The purposes of the device according to the invention are:
to determine if there is a flow of material into the tank (10) and to give an indication of the volume of the material (solid or liquid) which has been supplied in such tank (10).

The device consists of one or more acoustical sensors (11) (for example microphones) which are applied on the external part of the tank and which are capable of recording the noise produced by the material entering in the tank during the filling operation. The sensors (11) are preferably applied to the external wall of the tank by means of a suitable adhesive as, for example, epoxy resin.

The sensor (11) is connected to an Analog to Digital Converter (12) which samples the signals and transmits them to a FFT (Fast Fourier Transformer) (13) which determines the harmonic content of the original signals and transmits them to a Neural Network (14) which analyses the harmonic "imprint" of the tank.

The device can also include a Microprocessor circuit (15) which can exchange information by radio frequency transmission with a receiver located at the tank station (this information being for example identification number of the truck, litres of fuel supplied, charged price, credit card transaction record etc.).

The neural network (14), or an equivalent software, will be trained to recognise the harmonics generated by the filling of a specific tank with a given material for example a liquid (as for example: petrol, oil, water, milk, etc.) but also a solid (as for example; sand, powders, metals etc).

Considering, as an example, the case of truck tanks to be filled up with gasoline, the training of the neural network will be performed as follows: First step will be to collect data regarding the noises of the filling of many different truck tanks with gasoline or with a liquid of the same density. This step allows the neural network to get information about how to recognise a tank that is being filled with gasoline and will allow the neural network and the system to detect when a flow is present from a dispenser into the tank.

A second step can be chosen to train the neural network to detect eventual frauds or faults. This can be done, for example, generating noises coming from possible fraudulent or faulty conditions (e.g. liquid poured outside the tank or on the outside surface of the tank) and proceeding as described above.

This system can have a further development in order to exchange real time data with a remote database with the purpose of updating and being updated by its data and offer a further level of anti-fraud protection. Referring to the above block diagram, the item 15 is a transmitter-receiver placed onboard. This device transmits information to a remote data base, this information being the identification code of the truck and the result of the frequency analysis of the noise generated by the filling of its tank with indications regarding eventual tank tampering (mismatch between the truck ID and the tank identified by the noise analysis) or updates of the noise profile to be stored on the remote data base (these updates can be related, for example, to slight modifications of the tank due to ageing).

It is important to notice that the harmonics generated by the material falling in the tank during the filling operation represent an "imprint" of the tank in the sense that they are typical for each tank and depends on the materials and the quantities entered in it; therefore, once the neural network has been trained to recognise the profile of the harmonics typical of the tank, this profile will represent an univocal tool to identify the tank and detect the quantity of material that has been poured in it.

It is important to notice that the device according to the invention does not require any change in the structure of the tank or of the vehicle since each component of the device can be easily positioned around the tank and it is not necessary to make any adjustment of the loading device which can be, for example, the usual nozzle of a gas station pump.

The system allows to detect frauds related to the spillage of the material supplied to the tank since it controls the quantity of material that is being poured in the tank and compares it with the quantity delivered from the pump; if there is a leakage or a fraudulent spillage of the material from the tank to an other container or if the pump indicator has been tampered with, or is out of order, the system will immediately detect a discrepancy between the quantity of liquid dispensed and the one actually entered into the tank and will interrupt the filling.

Obviously for applying the device and method according to the invention it is necessary that the material supplied produces a noise during the filling as it is the case with liquids, solids and so on, anyhow in the case of very viscous liquids, it will be sufficient to prearrange a suitable nozzle capable of inducing a turbulence in the liquid while falling in the tank in order to generate a noise which can be detected by the microphones of the device.

## Claims

1. Device for detecting the actual input of materials in a tank including a neural net or analogous software capable of analysing the harmonics of the acoustic wave generated by the material poured in the tank.

2. Device according to claim 1 consisting of one or more sensor 11 connected to an Analog to Digital Converter (ADC) 12 which samples the signals and transmit it to a Fast Fourier Transformer (FFT) 13 which process the signal and transmits it to a Neural Network 14 which analyses the harmonic "imprint" of the tank.

3. Device according to claim 2 wherein the device comprises a microprocessor (µP) 15 which can exchange information by radio frequency transmission with a receiving station of the tank station or loading device.

4. Device according to claims 1 - 3 wherein such device comprises a transmitter-receiver, placed onboard, which transmits to a remote data base the identification code of the truck and the result of the frequency analysis of the noise generated by the filling of its tank with indications regarding eventual tank tampering or updates of the noise profile to be stored on the remote data base.

5. Method for controlling the actual input of material in a tank analysing the harmonics generated by the falling of the material in the tank.

6. Method according to Claim 5 wherein the harmonics are analysed by a neural network or equivalent software.

7. Method according to claims 5 - 6 wherein the neural network is trained also to detect eventual frauds or faults.

8. Method according to claim 7 wherein the neural network or equivalent software is connected with a remote data base with which it exchanges data for updating and being updated on the actual conditions of the tank.

9. Method according to claims 5 - 8 wherein a device according to claims 1 - 4 is used.
